# EUROPÄISCHE PATENTSCHRIFT

(11) **EP 0 783 088 B1**
(45) Veröffentlichungstag und Bekanntmachung des Hinweises auf die Patenterteilung: **27.01.1999**
(21) Anmeldenummer: 96119661.5
(22) Anmeldetag: 07.12.1996
(51) Int. Cl.: F16L 59/02, F16L 58/10, H01B 3/44

(54) **Langgestreckte rohrförmige Hülle**
Elongated tubular sheath
Gaine tubulaire allongée

(30) Priorität: 15.12.1995 DE 19547031
(43) Veröffentlichungstag der Anmeldung: 09.07.1997
(73) Patentinhaber: EILENTROPP KG, D-51676 Wipperfürth (DE)
(72) Erfinder: Schwarmborn, Klaus, 51676 Wipperfürth (DE); Sikora, Manfred, 51688 Wipperfürth (DE); Steffes, Walter, 51676 Wipperfürth (DE)

(56) Entgegenhaltungen:
- CH-A- 379 754
- DE-A- 4 414 052
- DE-B- 1 019 132
- DE-B- 1 163 096
- FR-A- 1 353 839
- US-A- 4 701 362

## Beschreibung

Die vorliegende Erfindung betrifft eine langgestreckte rohrförmige Hülle aus gegen Temperaturbeanspruchung und/oder aggressive Medien widerstandsfähigen Kunststoffen.

Mit dem Erschließen immer neuer Anwendungsbereiche für an sich bereits im Markt befindliche Produkte ist es erforderlich, diese Produkte in ihren Eigenschaften den Forderungen des Marktes anzupassen. So werden in zunehmendem Maße hochtemperaturbeständige Werkstoffe, etwa auf Basis von Fluorpolymeren, für die Isolierung oder Umhüllung elektrischer Kabel und Leitungen eingesetzt, z. B. bei den sog. Heizkabeln oder auch auf dem weiten Gebiet der Sensortechnik, wo mit Temperaturen oberhalb 300° C gerechnet werden muß. Hier sind es, beispielsweise in der Automobilindustrie, die Zuführungsleitungen zur sog. Lambda-Sonde, die in Verbindung mit einem geregelten Katalysator dafür sorgt, daß die Abgasemissionswerte auf einem niedrigen Niveau gehalten werden.

Für andere Anwendungszwecke, etwa in der chemischen Industrie zur Probenentnahme, kommen medienführende Röhrchen zum Einsatz, die auch erhöhten Temperaturen ausgesetzt sind, vor allem aber unbeeinflußt von umgebenen aggressiven Medien ihre Funktionsfähigkeit bewahren müssen. Für all diese Zwecke ist es deshalb seit langem bekannt, Fluorpolymere, die aus der Schmelze nicht verarbeitbar sind, als Isolierung/Umhüllung für elektrische Kabel oder Leitungen einzusetzen bzw. Rohrwandungen aus solchen Materialien herzustellen. Als besonders vorteilhaft hat es sich hierbei erwiesen, für die genannten Zwecke das Fluorpolymere in Bandform zu verwenden, wobei das Material des Bandes gesintert oder ungesintert sein kann (CH-PS 562 098, DE-PS 32 14 447).

Nun gibt es aber Fälle, etwa in der Sensortechnik, wo es darauf ankommt, an einer Meßstelle Vergleichswerte von außen zur Verfügung zu haben, um nach einem Vergleich der Soll- und Istwerte Regelungen in einem Betriebssystem durchführen zu können. Solch ein Fall betrifft z. B. die bereits genannte Lambda-Sonde, bei der im Grunde in den vom Motorblock ausgehenden Abgasstrom eine entsprechend reaktionsfähige Elektrode hineinragt, deren eine Seite vom Abgasstrom umspült wird, während ihre andere Seite mit der Außenluft in Verbindung steht. Ein solches Regelsystem ist gegen Verschmutzung und Spritzwasser abzudichten mit dem Nachteil, daß es immer schwieriger wird, dem Regelsystem ausreichend Vergleichssauerstoff aus der Umgebungsluft zur Verfügung zu stellen. Versuche, hierzu, beispielsweise die freien Zwickelräume des elektrischen Leiters der Zuführungsleitung zu verwenden, hat unter Umständen zur Folge, daß Spritzwasser mit eingeschleppt wird und den Regelprozeß nachteilig beeinflußt.

Wird die langgestreckte rohrförmige Hülle selbst als Meßsonde oder Fühler verwendet, etwa zur Überwachung von elektrischen Anlagen, für Pipelines und dergl., z. B. um austretende oder in das System eindringende Flüssigkeiten oder Gase zu ermitteln und die Ein- oder Austrittsstelle an eine Überwachungszentrale zu melden, dann kommt es oft darauf an, das zu überwachende Medium zu selektieren, um Fehlmeldungen auszuschließen.

Zur Lösung der geschilderten Probleme sieht die Erfindung vor, daß über die Umfläche der Hülle verteilt Ausnehmungen oder Durchbrechungen in deren Wandung angeordnet sind, die von außen durch eine mikroporöse Schicht aus einem hochtemperaturbeständigen Fluorpolymeren abgedeckt sind. Eine solche gleichsam atmungsaktiv ausgebildete Hülle, z. B. als elektrische Isolierung der Zuführungsleitung zur genannten Lambda-Sonde verwendet, gestaltet eine problemlose Zufuhr der Außenluft über diese Zuleitung, durch den Filtereffekt der mikroporösen Abdeckung wird der benötigte Luftstrom frei von Schmutzteilchen und Spritzwasser gehalten. Der Regeleffekt wird so verbessert, die Lebensdauer der Regeleinrichtung erhöht.

Dieser Filtereffekt ist aber auch nutzbringend anwendbar im Falle von Überwachungssystemen, in denen die erfindungsgemäße langgestreckte rohrförmige Hülle mit oder ohne elektrische Leiter bzw. optische Adern als Kern unmittelbar als Meßsonde oder Meßfühler bzw. Überwachungsorgan dient. Bei einer z. B. zu einer Ölpipeline parallel verlaufenden Kontrolleitung, die aus einer entsprechend der Erfindung ausgebildeten Rohrleitung bestehen kann, wird bei einer Ölleckage Schmutz und Wasser an einem Eindringen in das Überwachungssystem gehindert. Die Kontrolle einer Leckage wird erleichtert, der Ort des Schadens problemlos ermittelt, vor allen aber wird die Betriebssicherheit und Zuverlässigkeit des Überwachungssystems verbessert.

Der geschilderte Einsatz der erfindungsgemäßen rohrförmigen Hülle in gleichen oder ähnlich gelagerten Fällen macht eine Anpassung der verwendeten Materialien an die jeweiligen Umgebungsbedingungen erforderlich. Vorteilhaft ist es deshalb in Durchführung der Erfindung, wenn der gegen Temperaturbeanspruchung und/oder aggressive Medien widerstandsfähige Kunststoff ein aus der Schmelze nicht verarbeitbares Polytetrafluorethylen ist.

Auch für die mikroporöse Schicht hat sich in Weiterführung der Erfindung ein aus der Schmelze nicht verarbeitbares Polytetrafluorethylen als zweckmäßig erwiesen, in dieser reinen Form oder aber auch in einer modifizierten Form mit höchstens 2 Gew. % Fluormonomeren. Solche Fluormonomere können z. B. solche auf Basis Hexafluorpropylen, Perfluorbutylethylen oder Perfluoralkyl-Perfluorvinyl-Ether sein, deren Perfluoralkylgruppen 1 bis 12 Kohlenstoffatome enthalten.

Eine andere vorteilhafte Möglichkeit ist die, das Polytetrafluorethylen in Pulver- bis Granulatform im Gemisch mit 1 bis 30 Gew. % thermoplastisch verformbaren Fluorpolymeren einzusetzen. Die als Komponente verwendeten thermoplastisch verformbaren Fluorpolymere können z. B. solche auf der Basis Polyvinylidenfluorid und Polytrifluorchlorethylen sein, sowie von thermoplastischen Copolymeren des Vinylidenfluorids und des Trifluorchlorethylens. In der Wärme verarbeitbare Fluorpolymere sind aber auch das Tetrafluorethylen/Hexafluorpropylen-Copolymer (FEP) sowie ein Tetrafluorethylen-Perfluoralkylvinylether-Copolymerisat (TFA/PFA).

Diese Komponenten im Basiswerkstoff der erfindungsgemäß aufgebauten Hülle dienen zur Brückenbildung einerseits zwischen den pulver- bis granulatförmigen Teilchen des Polytetrafluorethylens und zum anderen an der Oberfläche der die Ausnehmungen oder Durchbrechungen in der Hülle abdeckenden mikroporösen Schicht als Haftbrücken im Grenzbereich zur Umfläche der rohrförmigen Hülle. Diese Haftbrücken sind auch dann von Vorteil, wenn, wie nach der Erfindung auch vorgesehen, die mikroporöse Schicht aus einer oder mehreren Lagen eines Wickelbandes oder einer -folie besteht. In diesem Fall tragen sie weiter zur Verschweißung oder Verklebung der einzelnen Lagen des Wickelgutes bei.

Da es nach der Erfindung auf die Mikroporosität der Abdeckung ankommt, wird man diese durch Recken des Bandes oder der Folie herstellen, wobei Reckraten bis zu 2000 %, vorzugsweise zwischen 300 und 1000 %, zweckmäßig sind. Gleichzeitig mit der Reckung, in Bandrichtung oder quer dazu, oder auch im Verfahrensablauf nachgeschaltet sein kann ein Sintervorgang des Bandmaterials, auch zur Erhöhung der mechanischen Festigkeit.

Die Dicke des gereckten und vorteilhaft auch gesinterten Bandes oder der entsprechenden Folie beträgt dann 15 bis 250 µm, vorzugsweise 30 bis 100 µm.

Werden dem Polytetrafluorethylen keine thermoplastischen Fluorpolymere zur Erzielung von Haftbrücken zugegeben, kann es in Weiterführung der Erfindung oft vorteilhaft sein, mindestens die der Umfläche der rohrförmigen Hülle zugekehrte Wickellage mit dieser zu verkleben.

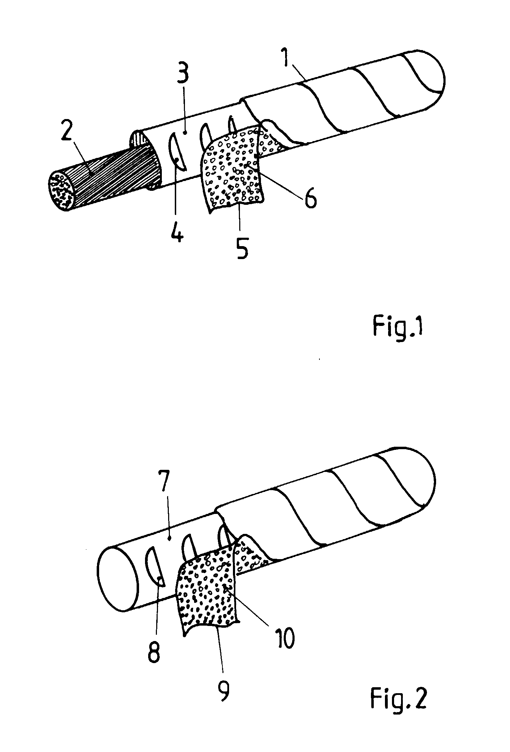

Die Erfindung sei anhand der in den Fig. 1 und 2 dargestellten Ausführungsbeispiele näher erläutert.

Die Fig. 1 zeigt eine Anschlußleitung 1 beispielsweise für eine nicht dargestellte Lambda-Sonde mit einem Strom führenden Leiter 2, der von der z. B. aus einem Polytetrafluorethylen bestehenden Isolierung 3 umgeben ist. In der Isolierung 3 sind Ausnehmungen oder Durchbrechungen 4 vorgesehen, beispielsweise durch Ausstanzen hergestellt, die die gesamte Isolierwandstärke durchdringen und damit den Weg für die für den Regelkreis benötigte Zuluft von außen freimachen. Wie dargestellt, können die Ausnehmungen oder Durchbrechungen 4 in Längsrichtung in vorgegebenen Abständen angeordnet sein, die Anordnung dieser Luftdurchtritte kann aber auch in Umfangsrichtung erfolgen oder wendelförmig die langgestreckte Hülle umschlingend.

Wesentlich für die Erfindung ist nun, daß die durch die Isolierung hindurchgreifenden Ausnehmungen 4 durch das Wickelband 5 nach außen abgedeckt sind, wobei dieses Wickelband 5 Mikroporen 6 aufweist, die die Zuluft problemlos hindurchtreten lassen, Spritzwasser, Schmutz und dergl. aber aus dem empfindlichen Regelkreis fernhalten.

Die Leitung 1 kann selbstverständlich auch mehradrig ausgebildet sein, die Isolierung 3 wäre dann der allen, z. B. drei, isolierten Adern gemeinsame Mantel. Ebenso können anstelle der elektrischen Leiter optische Adern verwendet werden, wobei diese aus Glas bestehen, aber auch aus Kunststoff hergestellt sein können, wenn es die Umgebungstemperaturen zulassen.

Die Fig. 2 zeigt abweichend von der Fig. 1 eine Rohrleitung bzw. ein Röhrchen 7, dessen Wandung durch die Ausnehmungen 8 durchbrochen ist. Diese können wiederum je nach Bedarf und Anordnung der Rohrleitung in der zu überwachenden Umgebung beliebig auf der Rohroberfläche verteilt angeordnet sein. Zur Abdeckung der Ausnehmungen 8 wiederum dient das Band 9, das in einer oder mehreren Lagen um die Rohrleitung 7, wie angedeutet, herumgewickelt ist. Die im Band vorgesehenen Mikroporen 10 erlauben den Durchtritt z. B. eines zu prüfenden gasförmigen oder flüssigen Mediums.

Entsprechend der Anordnung der Ausnehmungen 4 oder 8 auf der Umfläche der Hülle kann die Bebänderung über die gesamte Länge der Hülle erfolgen, aber auch nur im Bereich der Ausnehmungen 4 oder 8, wenn z. B. der Abstand zwischen jeweils zwei Ausnehmungen hinreichend groß ist.

## Patentansprüche

1. Langgestreckte rohrförmige Hülle aus gegen Temperaturbeanspruchung und/oder aggressive Medien widerstandsfähigen Kunststoffen, gekennzeichnet durch über die Umfläche der Hülle verteilt angeordnete Ausnehmungen oder Durchbrechungen, die von außen durch eine mikroporöse Schicht aus einem hochtemperaturbeständigen Fluorpolymeren abgedeckt sind.

2. Hülle nach Anspruch 1, dadurch gekennzeichnet, daß der gegen Temperaturbeanspruchung und/oder aggressive Medien widerstandsfähige Kunststoff ein aus der Schmelze nicht verarbeitbares Polytetrafluorethylen ist.

3. Hülle nach Anspruch 1, dadurch gekennzeichnet, daß das hochtemperaturbeständige Fluorpolymer der mikroporösen Schicht ein aus der Schmelze nicht verarbeitbares Polytetrafluorethylen ist.

4. Hülle nach Anspruch 3, dadurch gekennzeichnet, daß ein mit höchstens 2 Gew. % Fluormonomeren modifiziertes Polytetrafluorethylen verwendet ist.

5. Hülle nach Anspruch 3, dadurch gekennzeichnet, daß das Polytetrafluorethylen im Gemisch mit 1 bis 30 Gew. % thermoplastisch verformbarer Fluorpolymere verwendet ist.

6. Hülle nach Anspruch 1 oder einem der folgenden, dadurch gekennzeichnet, daß die mikroporöse Schicht aus einer oder mehreren Lagen eines Wickelbandes oder einer -folie besteht.

7. Hülle nach Anspruch 6, dadurch gekennzeichnet, daß das Wickelband oder die -folie gereckt ist.

8. Hülle nach Anspruch 6, dadurch gekennzeichnet, daß das Wickelband oder die -folie gesintert ist.

9. Hülle nach Anspruch 6, dadurch gekennzeichnet, daß die Dicke des Wickelbandes oder der -folie 15 bis 250 um, vorzugsweise 30 bis 100 µm beträgt.

10. Hülle nach Anspruch 1 oder einem der folgenden, dadurch gekennzeichnet, daß die mikroporöse Schicht auf der Umfläche der Hülle verklebt ist.

11. Hülle nach Anspruch 1 oder einem der folgenden, gekennzeichet durch die Verwendung als Isolierung für elektrische oder optische Leitungen.

12. Hülle nach einem der Ansprüche 1 bis 10, gekennzeichnet durch die Verwendung als medienführendes Rohr.

13. Hülle nach Anspruch 11 oder 12, gekennzeichnet durch die Verwendung als Sensorleitung oder Meßfühler.

## Claims

1. Elongated tubular sheath made of plastics resistant to temperature stresses and/or aggressive media, characterised by recesses or openings which are disposed distributed over the circumferential surface of the sheath and are covered from the outside by a microporous coating of a high temperature-resistant fluoropolymer.

2. Sheath according to claim 1, characterised in that the plastic resistant to temperature stresses and/or aggressive media is a polytetrafluorethylene which cannot be processed from the melt.

3. Sheath according to claim 1, characterised in that the high temperature-resistant fluoropolymer of the microporous coating is a polytetrafluorethylene which cannot be processed from the melt.

4. Sheath according to claim 3, characterised in that a polytetrafluorethylene modified with at most 2% by weight of fluoromonomer is used.

5. Sheath according to claim 3, characterised in that the polytetrafluorethylene is used in the mixture with 1 to 30% by weight of thermoplastically deformable fluoropolymers.

6. Sheath according to claim 1 or one of the following, characterised in that the microporous coating consists of one or more layers of a winding tape or a winding film.

7. Sheath according to claim 6, characterised in that the winding tape or the winding film is stretched.

8. Sheath according to claim 6, characterised in that the winding tape or the winding film is sintered.

9. Sheath according to claim 6, characterised in that the thickness of the winding tape or the winding film is 15 to 250 µm, preferably 30 to 100 µm.

10. Sheath according to claim 1 or one of the following, characterised in that the microporous coating is glued on the circumferential surface of the sheath.

11. Sheath according to claim 1 or one of the following, characterised by use as insulation for electrical or optical cables.

12. Sheath according to one of claims 1 to 10, characterised by use as a media-conveying tube.

13. Sheath according to claim 11 or 12, characterised by use as a sensor lead or measuring sensor.

## Revendications

1. Gaine tubulaire allongée fait d'une matière plastique résistant à la chaleur et/ou à des agents agressifs,
caractérisée en ce que
sur la surface de la douille sont réparties des ouvertures ou des passages qui sont recouverts extérieurement par une couche microporeuse d'un fluoropolymère résistant aux températures élevées.

2. Gaine selon la revendication 1,
caractérisée en ce que
la matière plastique résistant à la chaleur et/ou à des agents agressifs est constituée d'un polytétrafluoréthylène qui ne peut être fabriqué à partir du produit fondu.

3. Gaine selon la revendication 1,
caractérisée en ce que
le fluoropolymère résistant à la chaleur, composant la couche microporeuse, est un polytétrafluoréthylène qui ne peut être fabriqué à partir du produit fondu.

4. Gaine selon la revendication 3,
caractérisée en ce qu'
on utilise un polytétrafluoréthylène modifié contenant au plus 2 % en poids de fluoromonomère.

5. Gaine selon la revendication 3,
caractérisée en ce que
le polytétrafluoréthylène est utilisé en mélange avec de 1 à 30 % en poids de fluoropolymère déformable thermoplastiquement.

6. Gaine selon la revendication 1 ou une des suivantes,
caractérisée en ce que
la couche microporeuse est constituée d'une ou plusieurs couches d'une bande ou d'une feuille ou film enroulé.

7. Gaine selon la revendication 6,
caractérisée en ce que
la bande ou la feuille ou film enroulé est étirée.

8. Gaine selon la revendication 6,
caractérisée en ce que
la bande ou la feuille ou film enroulé est frittée.

9. Gaine selon la revendication 6,
caractérisée en ce que
l'épaisseur de la bande ou de la la feuille ou film enroulée est de 15 à 250 microns, de préférence 30 à 100 microns.

10. Gaine selon la revendication 1 ou une des suivantes,
caractérisée en ce que
la couche microporeuse est collée sur la surface de la gaine.

11. Utilisation d'une gaine allongée selon la revendication 1 ou une des suivantes,
caractérisée par
l'utilisation comme isolant pour des conducteurs électriques ou optiques.

12. Utilisation d'une gaine allongée selon une des revendications 1 à 10,
caractérisée en ce qu'
elle consiste à transporter des agents dans un tube.

13. Gaine ou tube selon la revendication 11 ou 12,
caractérisé en ce que
cette gaine ou ce tube est utilisé comme conducteur d'un appareil de détection ou de mesure.
